Europäisches Patentamt

European Patent Office

Office européen des brevets

(11) Publication number: **0 321 471 B1**

# EUROPEAN PATENT SPECIFICATION

(45) Date of publication of patent specification: **21.10.92**   (51) Int. Cl.⁵: **A21C  3/02**

(21) Application number: **87905213.2**

(22) Date of filing: **14.08.87**

(86) International application number:
**PCT/FI87/00103**

(87) International publication number:
**WO 88/01135 (25.02.88 88/05)**

(54) **SEAL CONSTRUCTION FOR A DOUGH ROLLER.**

(30) Priority: **20.08.86 FI 863363**

(43) Date of publication of application:
**28.06.89 Bulletin  89/26**

(45) Publication of the grant of the patent:
**21.10.92 Bulletin  92/43**

(84) Designated Contracting States:
**AT CH DE LI SE**

(56) References cited:
**DE-A- 2 741 294**
**DE-C- 2 623 575**

(73) Proprietor: **HYDROVOIMA OY**
**Kuormakatu 2**
**SF-20380 Turku 38(FI)**

(72) Inventor: **LAMMELA, Martti**
**Kyläsuonpolku 7 A**
**SF-20360 Turku 38(FI)**

(74) Representative: **Knoblauch, Ulrich, Dr.-Ing.**
**Kühhornshofweg 10**
**W-6000 Frankfurt am Main 1(DE)**

## Description

The invention relates to a dough roller having a seal construction for the prevention of leakages of dough between the main rolls and the lateral ends of a dough roller, said construction comprising a member provided at each end of the dough roller and scraping the end faces of the main rolls, and the members being placed adjacent to the nip between the main rolls.

In prior art apparatuses that roll dough into a mat, a seal construction has been used commonly that is based on a preset play between the main rolls and the lateral ends. The lateral ends are the plane side walls that define the transverse length of the space between the dough funnel and the main rolls.

It is a drawback of such a prior art seal solution that, by the effect of factors dependent on time and on dough types, abrasion and corrosion tend to increase the preset play. Increased leakages result. In the course of time, the leakage mix is gathered as deposits in some part of the roller unit, from where it falls down occasionally as "clots" onto the belt and ends up at the bottom of the mat that is being rolled. A problem is the fact that this cementlike deposit no longer consists of baking-quality dough, but it lowers the quality of the final products. Solutions for this problem have been sought for both by manufacturers of machinery and by bakers, yet, without success. It has not been possible to compensate for the abrasion and corrosion, and from time to time it has been necessary to subject the machines to a costly and time-consuming overhaul.

In DE-A-27 41 294 a seal construction for a dough roller is described wherein both ends of the apparatus are provided with members that scrape the end faces of the main rolls, viz. a spring loaded sealing rib covering more than 1/3 of each end face and provided with an arcuate path around each axis of the main rolls in order to return any dough that penetrates in between the end face and the sealing rib back into the dough funnel. Thus the dough is allowed to revolve about one revolution along with the main rolls, being initially pressed between the end faces of the main rolls and the sealing rib before it passes back into the dough funnel, the dough being scraped away from the end faces by means of the upper and/or the lower edge of each arcuate path. It is a drawback of this prior art seal construction that the baking quality of the dough, which has been subjected to high pressure and to a grinding movement, has been lost, i.e. this dough is "dead" and does not rise on baking. Thus, the dead dough residues recirculated to the dough have a deteriorating effect on the quality of the final product baked out of this dough.

The object of the present invention is to eliminate the above problems and drawbacks, which has been achieved by using a seal construction which is characterized in that each member is substantially V-shaped and its V-shaped tip is directed in the direction of rotation of the rolls and positioned near the nip, i.e. near the location, at which the dough is usually extruded to some extent. By means of this solution, it is possible to prevent penetration of dough between the end faces of the main rolls and the lateral ends completely. The quality of the bread products produced in rollers provided with a member or doctor in accordance with the invention is improved significantly, and the cost of maintenance of the equipment is reduced considerably, because the servicing intervals of the equipment become decisively longer.

Further characteristics of the invention are stated in the subclaims 2 to 3.

The invention will now be described in more detail with reference to the drawings, wherein

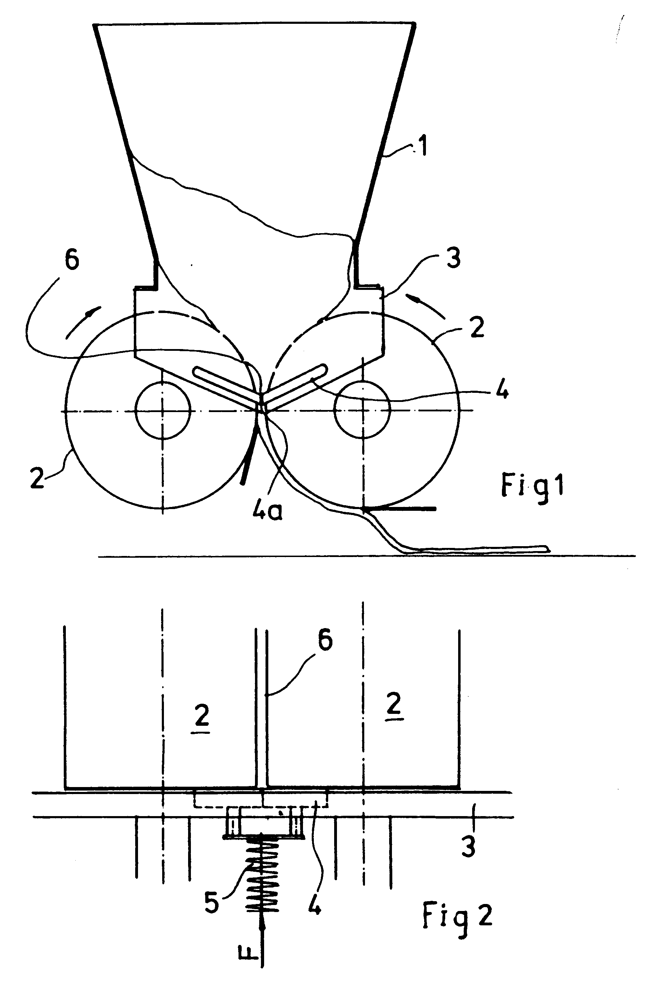

Fig. 1 shows an example of a seal construction in accordance with the invention seen from the side of the dough roller, and

Figure 2 shows an apparatus in accordance with Fig. 1 viewed from above, with the dough funnel removed.

A typical dough roller includes two main rolls 2 jointly operative with each other and a dough funnel 1 provided above the rolls. The transverse length of the space between the dough funnel 1 and the main rolls 2 is defined by side walls or lateral ends 3. The dough roller operates so that dough introduced into the dough funnel 1 is rolled in the nip 6 between the main rolls 2 revolving in the direction indicated by the arrows into a dough mat, which is passed to the following stage of treatment preferably by means of a conveyor belt running underneath the main rolls 2. Any amount of dough leaking into the gaps between the ends of the main rolls 2 and the lateral ends 3 is scraped off immediately by means of doctors 4 in accordance with the invention, so that the leakage of dough cannot be gathered as deposits in any part of the roller unit.

The doctor 4 is preferably V-shaped and placed in such a way that its tip 4a is directed in the direction of rotation of the main rolls 2. Thereat the shape of the doctor 4 contributes to the fact that any dough attempting to penetrate into the gap between the main rolls 2 and the lateral ends 3 is immediately guided back into the nip 6 between the main rolls 2.

In view of guaranteeing the operability of the apparatus and compensating for wear, the doctor 4 is preferably spring-loaded by means of a compression spring 5. The compression force of the doctor 4 is easily adjustable by means of a simple regulating device, such as an adjusting screw. Thus, owing to this solution, the compression force of the doctor 4 remains at the desired level in spite of thermal expansions or contractions of the main rolls 2.

The doctor 4 is preferably made of a wear-proof and corrosion-proof material, such as tin bronze.

## Claims

1. Dough roller having a seal construction for the prevention of leakages of dough between the main rolls (2) and the lateral ends (3) of a dough roller said construction comprising a member (4) provided at each end (3) of the dough roller and scraping the end faces of the main rolls (2), and the members (4) being placed adjacent to the nip (6) between the main rolls (2), characterized in that each member (4) is substantially V-shaped and in that its V-shaped tip (4a) is directed in the direction of rotation of the rolls (2) and positioned near the nip (6).

2. Dough roller having a seal construction according to claim 1, characterized in that the member (4) is spring-loaded (5) and its compression force is adjustable by means of an adjusting screw.

3. Dough roller having a seal construction according to claim 2, characterized in that the member (4) is made of tin bronze.

## Patentansprüche

1. Teigwalzvorrichtung mit einer Dichtungskonstruktion zum Verhindern des Austritts von Teig zwischen den Hauptwalzen (2) und den seitlichen Enden (3) der Teigwalzvorrichtung, wobei die Konstruktion ein Teil (4) aufweist, das an jedem Ende (3) der Teigwalzvorrichtung vorgesehen ist und die Endflächen der Hauptwalzen (2) abschabt, und die Teile (4) neben dem Spalt (6) zwischen den Hauptwalzen (2) angeordnet sind, dadurch gekennzeichnet, daß jedes Teil (4) im wesentlichen V-förmig ist und daß seine V-förmige Spitze (4a) in Richtung der Drehung der Walzen (2) gerichtet und in der Nähe des Spaltes (6) angeordnet ist.

2. Teigwalzvorrichtung mit einer Dichtungskonstruktion nach Anspruch 1, dadurch gekennzeichnet, daß das Teil (4) federbelastet (5) ist und seine Druckkraft mittels einer Stellschraube einstellbar ist.

3. Teigwalzvorrichtung mit einer Dichtungskonstruktion nach Anspruch 2, dadurch gekennzeichnet, daß das Teil (4) aus Zinnbronze hergestellt ist.

## Revendications

1. Rouleau à pâte comprenant une construction étanche évitant les fuites de pâte entre les rouleaux principaux (2) et les extrémités latérales (3) d'un rouleau à pâte, ladite construction comprenant un membre (4), disposé à chaque extrémité (3) du rouleau à pâte, raclant les faces des extrémités des rouleaux principaux (2), les membres (4) étant disposés de façon adjacente à l'espacement (6) entre les rouleaux principaux (2), caractérisé en ce que chacun des membres (4) est en grande partie en forme de "V" et en ce que la pointe du "V" est dirigée dans le sens de rotation des rouleaux (2) et disposée près de l'espacement (6).

2. Rouleau à pâte comprenant une construction étanche selon la revendication 1, caractérisé en ce que le membre (4) est soumis à l'action d'un ressort (5) ayant une force de compression ajustable au moyen d'une vis d'ajustement.

3. Rouleau à pâte comprenant une construction étanche selon la revendication 2, caractérisé en ce que le membre (4) est fabriqué en bronze.

Fig 1

Fig 2